# EUROPEAN PATENT APPLICATION

(11) **EP 4 606 766 A1**
(43) Date of publication of application: **27.08.2025**
(21) Application number: 24382201.2
(22) Date of filing: 23.02.2024
(51) Int. Cl.: C01B 32/186, C01B 32/194

(54) **PROCESS FOR OBTAINING A PRODUCT WHICH COMPRISES GRAPHENE AND PRODUCT OBTAINED**

(71) Applicant: Graphenea Semiconductor S.L.U., 20009 Donostia - San Sebastian, Guipuzcoa (ES)
(72) Inventor: ZURUTUZA ELORZA, Amaia, Donostia - San Sebastián (ES); CENTENO PEREZ, Alba, Donostia - San Sebastián (ES); MAESTRE CARO, Arantxa, Donostia - San Sebastián (ES)
(74) Representative: Balder IP Law, S.L.

(57) **Abstract**

A process for obtaining a product which comprises graphene, the process comprising: providing a layered structure which across a cross section of the same comprises stacked, in the same order, a rigid substrate, an adhesive polymer layer, graphene and a copper layer attached to a surface of the graphene; removing the copper layer, thereby exposing the surface of the graphene; treating the exposed surface of the graphene with an adhesion promoter and an amine containing chemical compound. Also, a product comprising graphene and obtained by the process.

## Description

### TECHNICAL FIELD

The present invention relates to the field of graphene processing. More precisely, it relates to a process for obtaining a product which comprises graphene. Said process may also be referred to as "method". Also, the present disclosure is related to a product comprising the graphene.

### STATE OF THE ART

Graphene is a material with many potential applications in electronics including photonics, optoelectronics, sensors and biosensors. Consequently, the scientific community and the electronics industry have developed a plethora of methods for the fabrication and processing of graphene for electronics. A widely studied approach for fabricating graphene for electronic applications is to grow single-layer graphene on a substrate, e.g. on a copper layer, and then somehow transfer the graphene on a rigid substrate, thereby obtaining a product which comprises the rigid substrate and the graphene on the substrate. Such a product may be used "as is" for making an electronic device, or may act as an intermediate product which is used for transferring the graphene from the rigid substrate to a different substrate, for thereby obtaining a further product comprising the graphene on said different substrate. Hence, there are known conventional methods for obtaining a product comprising graphene on a rigid substrate, and for further using said product in the fabrication of electronics.

An important problem with the conventional known methods, is that they yield products in which the graphene is of poor quality, and in addition it is contaminated with metal impurities which act as electron/hole traps and, hence, are detrimental to the electronic properties of the graphene. Furthermore, the presence of metal impurities above > 10¹² at/cm² does not allow the processing of graphene in large semiconductor fabrication plants (fabs). Moreover, in the products obtained by said known methods, the transferability of the graphene, i.e. the ability for transferring the graphene from the rigid substrate to a different substrate without causing the appearance of a significant amount of defects on the graphene, is poor. Hence, the graphene-containing products which are obtained from the aforementioned conventional methods are of poor quality and unsuitable for use in the industrial production of high-quality electronics.

Therefore, there is a need for products comprising graphene, and for related processes (methods) for obtaining said products, that overcome the drawbacks of the conventional ones.

### DESCRIPTION OF THE INVENTION

The present invention overcomes the drawbacks of the conventional processes of obtaining some products comprising graphene. In particular, the present invention enables obtaining a graphene product which can be used for easily and successfully transferring the graphene from a rigid substrate to a different substrate e.g. to a target wafer. Moreover, advantageously, in said product the graphene may be of high quality, may have good transferability to a target substrate, may exhibit good adhesion onto said target substrate, have exceptionally low levels of contamination with metal impurities/contaminants (Li, Cu, Ca, Mg, Al, K, Ti, V, Cr, Mn, Fe, Co, Ni, Zn, As, Sr, Mo, Cd, Ba, W, Pb and Bi atoms), and may be suitable for electronic applications.

A first aspect of the invention concerns a process for obtaining a product which comprises graphene, the process comprising: providing a layered structure which across a cross section of the same comprises stacked, in the same order, a rigid substrate, an adhesive polymer layer, graphene and a copper layer attached to a surface of the graphene; removing the copper layer, thereby exposing the surface of the graphene; treating the exposed surface of the graphene with an adhesion promoter and an amine containing chemical compound. It may be understood that each of the molecules of the amine containing chemical compound comprises one or more amino groups (i.e. amine groups).

The copper layer may optionally be, or originate from, a copper foil. In a preferred embodiment the copper layer is a copper or copper alloy film deposited on a sapphire substrate, and subsequently separated from the sapphire substrate. Also, in a preferred embodiment said copper layer is a copper foil or film on a surface on which there has been grown the graphene by means of a suitable technique, and preferably by means of chemical vapor deposition (CVD). The latter is a technique which can advantageously be used for growing/producing high quality graphene on a copper surface at a high production rate. Preferably said CVD is thermal CVD or plasma enhanced (PE) CVD. Hence, the layered structure used in the process according to the invention, may optionally be provided by means of a method which comprises growing the graphene on a copper foil or copper sheet or copper layer or copper-based film, by means of chemical vapor deposition, thereby forming a first stack that comprises said copper layer (or copper sheet or foil or film) and the graphene. Further optionally, said first stack may then be bonded to a second stack that comprises the rigid substrate and the polymer deposited on the rigid substrate. Said bonding of the aforementioned first and second stacks advantageously allows for controllably manufacturing the layered structure in a simple and fast way. Hence, in a preferred embodiment of the method of the first aspect of the invention, the step of providing the layered structure comprises: growing the graphene on the copper layer, preferably by chemical vapor deposition, thereby forming a first stack that comprises the graphene and the copper layer; depositing the adhesive polymer layer on the rigid substrate, thereby forming a second stack that comprises the adhesive polymer and the rigid substrate; bonding together the first stack and the second stack via attaching the surface of the graphene to the adhesive polymer layer.

Advantageously, in the above process the adhesion promoter can significantly improve the transferability of the graphene from the rigid substrate to another substrate (e.g. a target substrate), improve the adhesion of the graphene to said another (target) substrate, and may also contribute to reducing the concentration of metal impurities, in particular copper, on the exposed surface of the graphene. Said copper may originate from the copper layer which may optionally have been used for the fabrication (i.e. the growth) of the graphene on the copper layer. The use of the adhesion promoter in the process according to the invention, may advantageously also improve the hydrophilicity of the treated surface of the graphene, and it is contemplated that in at least some embodiments of the process, an observed improved transferability of the graphene may be correlated with an improved hydrophilicity of the exposed surface of the graphene.

In some preferred embodiments of the process of the first aspect of the invention, the adhesion promoter comprises an organic chemical compound which comprises any of a hydroxy group, a carboxylic group, an amine group, an aldehyde group or a combination thereof. Advantageously when the adhesion promoter is or comprises an organic chemical compound which comprises one or more of said groups, then the latter may very efficiently remove metal impurities, particularly copper atoms, from the surface of the graphene by forming complexes with said copper atoms and/or with other metal impurities. Moreover, it is contemplated the possibility that when the adhesion promoter comprises any of said groups, it may cause an optimized and improved transferability of the graphene, as well as an improved hydrophilicity or wettability of said graphene. Said improved transferability of the graphene may be, or be manifested as, an improved adhesion of the graphene to a target substrate to which the graphene can be transferred. In some preferred embodiments, the adhesion promoter comprises or is a hydroxy group containing chemical compound. It may be understood that each of the molecules of the hydroxy group containing chemical compound comprises one or more hydroxy groups. In some non-limiting examples, said hydroxy group containing chemical compound is any of: citric acid, lactic acid, tartaric acid or catechol. In some very preferred embodiments, the adhesion promoter comprises or is any of glucose, a lactic acid, a citric acid, a tartaric acid, a uric acid, or a catechol. The use of one of the aforementioned specific compounds, and especially the use of a hydroxy group containing chemical compound, as the adhesion promoter may further optimize and improve the product that is obtained by the method of the first aspect of the invention. Hence, in a most preferred embodiment, the adhesion promoter is a hydroxy group containing chemical compound. It has been found that the use of a hydroxy group containing chemical compound as an adhesion promoter may result to an exceptionally low concentration of copper impurities on the surface of the treated graphene, and may contribute to an exceptionally good transferability and adhesion of the graphene to a target substrate.

Advantageously, the amine containing chemical compound used in the process of the first aspect of the invention may also contribute towards reducing the contamination on the exposed surface of the graphene, in particular the contamination of said surface with metal impurities (Li, Cu, Ca, Mg, Al, K, Ti, V, Cr, Mn, Fe, Co, Ni, Zn, As, Sr, Mo, Cd, Ba, W, Pb and Bi atoms), especially the contamination with copper. It is contemplated that the respective functional group or groups of the amine containing chemical compound used in the process of the first aspect of the invention, may bond or form complexes with metal atoms or metal ions which may possibly be located on the surface of the graphene, and remove therefrom said metal ions or atoms. In a preferred embodiment the amine containing chemical compound is an amine. A particular amine containing chemical compound that works exceptionally well in the present invention is methylamine which advantageously may be very efficient in reducing the metal contamination of the exposed graphene surface. Hence, in a preferred embodiment of the invention, the amine containing chemical compound is methylamine. In other embodiments of the invention, the amine containing chemical compound is ethanolamine or propanolamine.

As described above, the method of the first aspect of the invention may advantageously result to obtaining a graphene product wherein the exposed surface of the graphene is exceptionally clean meaning that the concentration of copper on said exposed surface is exceptionally low e.g. is lower than 10¹² atoms/cm² or even lower than 10¹¹ atoms/cm². When said concentration is lower than 10¹² atoms/cm² or 10¹¹ atoms/cm², the graphene is considered to be particularly suitable for electronic applications and for processing in large semiconductor fabrication plants. Because when the concentration of the aforementioned contaminants is higher, this may possibly deteriorate or uncontrollably alter the electronic properties of the graphene and this contamination forbids the further processing of graphene in semiconductor fabrication plants. Hence, in a preferred embodiment the concentration of copper on the treated exposed surface of the graphene is less than 10¹² atoms/cm². More preferably said concentration is less than 10¹¹ atoms/cm². More preferably, said concentration of the copper is measured with total reflection X-Ray fluorescence or vapor phase decomposition (VPD). The latter are well known techniques that advantageously are widely used for measuring the concentration of metal contaminants on graphene.

The treatment of the exposed surface with the amine containing chemical compound may occur simultaneously with the treatment with the adhesion promoter, or may happen in a sequential manner i.e. first treat the exposed surface with the amine containing chemical compound or the adhesion promoter, and then treat the surface with the adhesion promoter or the amine containing chemical compound, respectively. Moreover, optionally there may be applied more than one treatments with the amine containing chemical compound and/or the adhesion promoter, such that the cleaning of the graphene's exposed surface (i.e. the removal of contaminants from the graphene's surface), and/or the transferability and adhesion of the graphene onto a target substrate, may advantageously be further improved. However, preferably the graphene's exposed surface may be first treated with the adhesion promoter and then be treated with the amine containing chemical compound so that the amine containing chemical compound cannot inhibit the interaction and possible bonding of the adhesion promoter with the exposed surface or with the metallic impurities which are possibly located on said exposed surface. For this reason, in a preferred embodiment, the treating of the exposed surface of the graphene comprises wetting the exposed surface with a first solution comprising the adhesion promoter, and afterwards wetting the exposed surface with a second solution comprising the amine containing chemical compound. Preferably the concentration of the amine containing chemical compound in said second solution is from 10⁻⁷ vol% to 1 vol%, because then the possible beneficial effect of the amine containing chemical compound in removing metal impurities, and in particular iron, is further optimized. Further preferably, in the latter preferred embodiment the concentration of the adhesion promoter in the first solution is at least 1 mM, and more preferably is from 1 mM to 1 M, because then the possible beneficial effects of the adhesion promoter in removing metal impurities, particularly copper, and in advancing the transferability and adhesion of the graphene to a target substrate, may be further optimized.

As mentioned, treating the exposed graphene surface with the amine containing chemical compound may optionally happen simultaneously with treating the surface with the adhesion promoter, so that advantageously the overall process is simpler and faster. This may be realized by treating the exposed graphene surface with a solution which contains both the amine containing chemical compound and the adhesion promoter, and said solution may be called compound solution. Hence, in a preferred embodiment of the process according to the first aspect of the invention, the treating of the exposed surface of the graphene comprises wetting the exposed surface with a compound solution which comprises the adhesion promoter and the amine containing chemical compound. Preferably the concentration of the amine containing chemical compound in the compound solution is from 10⁻⁷ vol% to 1 vol%, and/or the concentration of the adhesion promoter in the compound solution is at least 1mM. More preferably the concentration of the adhesion promoter in said compound solution is from 1 mM to 1 M. Advantageously, when the concentration(s) of the adhesion promoter and/or of the amine containing chemical compound in the compound solution is/are within the aforementioned corresponding range(s), this may further optimize the corresponding beneficial effects of the adhesion promoter and the amine containing chemical compound, respectively, similarly to what is mentioned in the previous paragraph.

The removal (i.e. the removing) of the copper layer from the provided layered structure may be done using an electrochemical delamination or a chemical etching technique, or a combination thereof. The chemical etching technique preferably involves (i.e. comprises) exposing the copper layer of the layered structure to an etchant solution. The optional use of said etchant solution may comprise immersing the layered structure or the latter's copper layer in the etchant solution, or covering or wetting the copper layer with the etchant solution. Hence, in a preferred embodiment, the removing of the copper layer is a chemical etching using an etchant solution. In a very preferred embodiment, said etching is a chemical etching using an etchant solution which comprises hydrochloric acid. Advantageously an etchant solution comprising hydrochloric acid may be very effective in etching away the copper layer.

In a preferred embodiment wherein the removing of the copper layer is done chemically using an etchant solution, the latter (i.e. the etchant solution) comprises the adhesion promoter and/or the amine containing chemical compound, and the treating of the exposed surface of the graphene comprises wetting the exposed surface with the etchant solution. Using an etchant solution which also includes one or, preferably, both of the adhesion promoter and the amine containing chemical compound, may advantageously allow for simplifying and reducing the duration of the overall process by avoiding using separate solutions and respective wetting and/or cleaning steps for treating the graphene with each one of the etchant(s), the amine containing chemical compound, and the adhesion promoter. Hence, by avoiding using said separate solutions for the etchant and for one or both of the amine containing chemical compound and the adhesion promoter, advantageously the overall process may be simpler and faster to complete. For example, in some embodiments wherein for removing the copper layer there is used an etchant solution that comprises the amine containing chemical compound and/or the adhesion promoter, by immersing the layered structure within said etchant solution, the latter may start to etch away the copper layer, and when all or parts of said copper layer is etched away thereby leaving the graphene surface exposed, then the amine containing chemical compound and/or the adhesion promoter in the same etchant solution may start acting on the exposed surface of the graphene.

In a preferred embodiment wherein the removing of the copper layer is done chemically using an etchant solution which comprises the adhesion promoter, the concentration of the adhesion promoter in the first solution is at least 1 mM. More preferably the concentration of the adhesion promoter is from 1 mM to 1M. If the concentration of the adhesion promoter is too low (e.g. less than 1 mM) then the beneficial effect that the adhesion promoter may have on the exposed surface of the graphene may be insignificant. Also, if the concentration of the adhesion promoter is too high (e.g. more than 1 M) then the effect that the adhesion promoter may have on the graphene may be suboptimal or be accompanied by unwanted adverse effects. Further preferably the adhesion promoter is a hydroxy group containing chemical compound. As mentioned earlier, a hydroxy group containing chemical compound works exceptionally well as the adhesion promoter in the method according to the invention.

In a preferred embodiment of the process of the first aspect of the invention, said process further comprises the step of bonding a target substrate to the treated exposed surface of the graphene, thereby obtaining an intermediate structure (i.e. an intermediate product) which across a cross section of the same comprises, in the same order, the rigid substrate, the adhesive polymer layer, the graphene and the target substrate. In a preferred embodiment which is according the previous one, the process further comprises removing the rigid substrate, and subsequently also removing the adhesive polymer, from the rest of the intermediate structure.

As indicated further above, the copper layer of the layered structure comprises copper or is made of copper or a copper alloy. In a non-limiting example, the copper layer is made of an alloy of copper and nickel. However, optionally, in the process of the first aspect of the invention, the layered structure instead of the copper layer, and in the place of the latter, may comprise a different metallic layer (i.e. a layer that comprises at least one metal). Said different metallic layer may comprise one or more metals such as for example any of nickel (Ni), cobalt (Co), ruthenium (Ru) or another metal. Said metallic layer may preferably be made of a catalyst suitable for the growth thereon of the graphene of the layered structure, and in some non-limiting examples said catalyst comprises Ni or Co or Ru.

A second aspect of the invention concerns a product comprising graphene, wherein said product is obtained by the process of the first aspect of the invention.

Another aspect of the invention concerns a product comprising a rigid substrate and graphene on the rigid substrate, wherein the concentration of copper on a surface of the graphene is less than 10¹² atoms/cm², preferably less than 10¹¹ atoms/cm². Preferably the surface of the graphene is exposed. Preferably, in said product the concentration of iron on the surface of the graphene is also less than 10¹² atoms/cm², preferably less than 10¹¹ atoms/cm². Most preferably said concentration(s) of the copper and/or the iron on the surface of the graphene is measured with total reflection X-Ray fluorescence (TXRF). It is noted that optionally said copper and/or iron concentrations may refer to the respective concentrations measured by TXRF when the graphene in on the rigid substrate, or may refer to the respective concentrations measured after the occurrence of a transfer of the graphene from the rigid substrate to a target substrate. Hence, for measuring with the TXRF technique the concentration of the copper and/or iron on the surface of the graphene of the product of the third aspect of the invention, optionally the graphene may be transferred from the rigid substrate to the target substrate before said graphene is measured with the TXRF technique.

Additional advantages and features of the invention will become apparent from the detailed description that follows and will be particularly pointed out in the appended claims.

### BRIEF DESCRIPTION OF THE DRAWINGS

To complete the description and in order to provide for a better understanding of the invention, a set of drawings is provided. Said drawings form an integral part of the description and illustrate embodiments of the invention, which should not be interpreted as restricting the scope of the invention, but just as examples of how the invention can be carried out. The drawings comprise the following figures:
Fig. 1 illustrates a flow diagram of a preferred embodiment of a process (method) according to the invention.
Fig. 2 illustrates a flow diagram of a preferred embodiment of a process (method) according to the invention.
Fig. 3 illustrates a flow diagram of a preferred embodiment of a process (method) according to the invention.
Fig. 4 illustrates a flow diagram of a preferred embodiment of a process (method) according to the invention.
Fig. 5 illustrates a flow diagram of a preferred embodiment of a process (method) according to the invention.
Fig. 6 schematically illustrates a preferred embodiment of a process for obtaining a product according to the invention.
Fig. 7 illustrates images of a product obtained by a process according to the invention.
Fig. 8 illustrates images of a product obtained by a conventional method.
Fig. 9 illustrates Cu and Fe contamination maps of a product comprising graphene and obtained by an embodiment of the invention, wherein said contamination maps were obtained by total reflection X-Ray fluorescence (TXRF) measurements.

### DESCRIPTION OF A WAY OF CARRYING OUT THE INVENTION

The following description is not to be taken in a limiting sense but is given solely for the purpose of describing the broad principles of the invention. Next embodiments of the invention will be described by way of example, with reference to the above-mentioned drawings, showing methods and products according to the invention, and some related results.

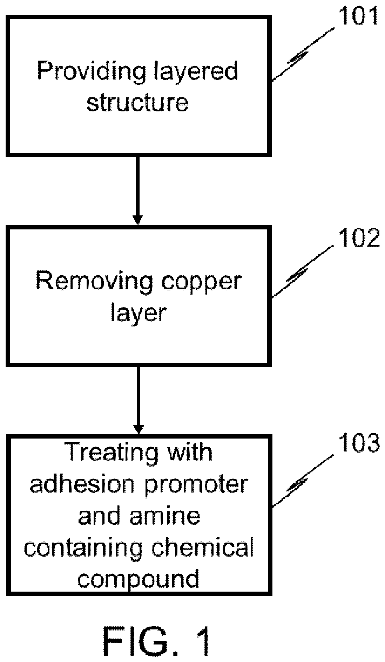

Fig. 1 illustrates a preferred embodiment of a process according to the first aspect of the invention. The process (i.e. the method) of Fig. 1 comprises the following: in step 101, providing a layered structure which across a cross section of the same comprises stacked, in the same order, a rigid substrate, an adhesive polymer layer, graphene and a copper layer attached to a surface of the graphene; in step 102, removing the copper layer, thereby exposing the surface of the graphene; in step 103, treating the exposed surface of the graphene with an adhesion promoter and an amine containing chemical compound. Said removing preferably is a chemical etching i.e. an etching done using an etchant chemical solution. Also, it is noted that each one of steps 101, 102 and 103 may optionally comprise sub-steps. Non-limiting examples of said optional sub-steps may include rinsing or cleaning of the layered structure or of any intermediate product or of the final product that is obtained from the initially provided layered structure during or at the end of the process. For example, step 102 may optionally comprise the sub-step of rinsing or cleaning (e.g. using distilled water or other solvent or cleaning solution) the layered structure after removing therefrom the copper layer, and before treating it with the adhesion promoter in step 103.

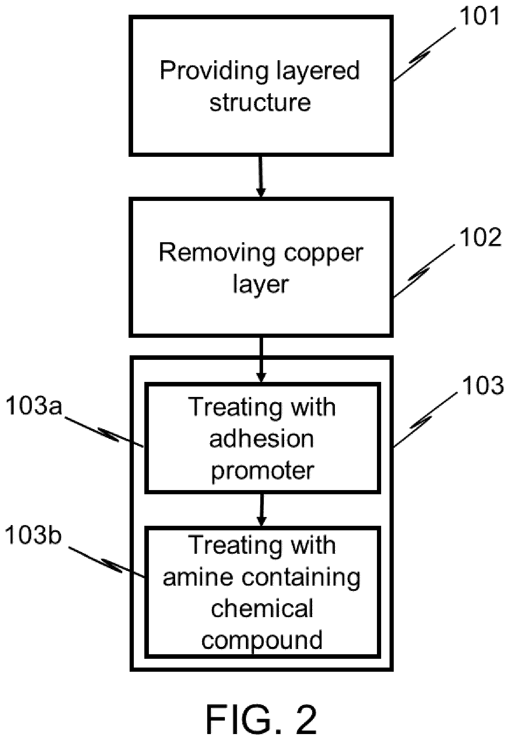

Step 103 may optionally comprise the sub-steps shown in Fig. 2. The process of Fig. 2 comprises the steps 101, 102 and 103, wherein the step 103 comprises: in sub-step 103a, treating the exposed surface of the graphene with the adhesion promoter; and in sub-step 103b, treating the exposed surface of the graphene with the amine containing chemical compound. Preferably said sub-steps 103a and 103b may be conducted by first treating the exposed graphene surface with a first treatment solution which comprises the adhesion promoter, and subsequently treating the graphene surface with a second treatment solution which comprises the amine containing chemical compound. Alternatively, the graphene surface may be treated simultaneously with both the adhesion promoter and the amine containing chemical compound, e.g. by treating the graphene with a compound solution which contains both the amine containing chemical compound and the adhesion promoter. It has been observed that the beneficial effects of the adhesion promoter on the graphene may be further optimized when the graphene is either treated simultaneously with both the adhesion promoter and the amine containing chemical compound, or is treated first with the adhesion promoter, and afterwards with the amine containing chemical compound. Hence, it is preferable that in step 103 the graphene is either treated simultaneously with both the adhesion promoter and the amine containing chemical compound, or is treated first with the adhesion promoter, and afterwards with the amine containing chemical compound as indicated in Fig. 2.

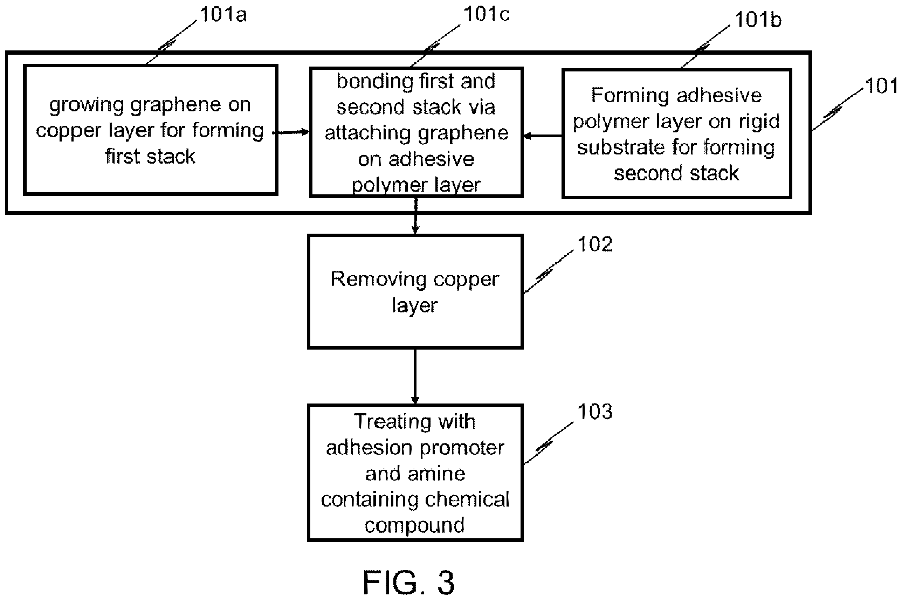

Step 101 of providing the layered structure may optionally include fabricating the layered structure, as is the case in the embodiment of Fig. 3 wherein said step 101 comprises the following: in step 101a, growing the graphene layer on the copper layer, thereby forming a first stack that comprises said graphene layer and the copper layer; in step 101b, depositing the adhesive polymer layer on the rigid substate, thereby forming a second stack which comprises the adhesive polymer layer on (i.e. adhered to) the rigid substrate; in step 101c, bonding together the first and the second stacks, with the graphene layer of the first stack being attached to the adhesive polymer layer of the second stack, so the second stack is attached or adhered to the graphene. It is noted that in some embodiments which are similar to the embodiment of Fig. 3, one or both of sub-steps 101a and 101b are replaced by respectively simply providing the aforementioned first and second stacks which for this purpose may have been premade. It is noted that the rigid substrate may optionally be any of a glass substrate, a glass carrier, a silicon wafer, a Si/SiO₂ wafer or another type of rigid substrate. Preferably the rigid substrate comprises a glass substrate or a silicon-based wafer such as for example a wafer comprising any of a Si layer, a SiO₂ layer, a Si₃N₄ layer or another type of layer comprising silicon.

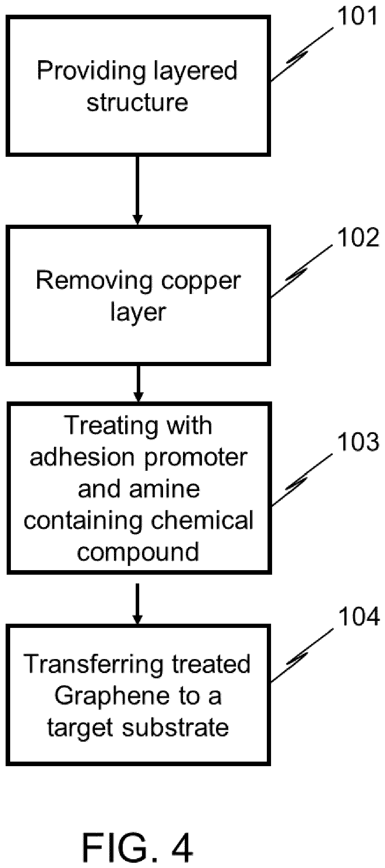

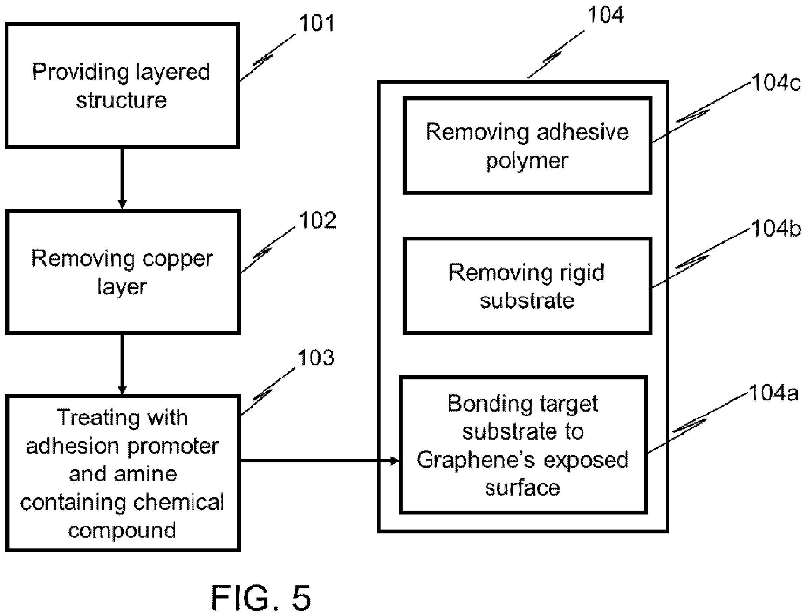

After treating the exposed surface of the graphene with the adhesion promoter and the amine containing chemical compound, additional processing steps may optionally be applied, as for example happens in the embodiments of Fig. 4 and Fig. 5. The preferred embodiment of Fig. 4, comprises the steps 101, 102, and 103 of Fig. 1, and further comprises step 104. It can be understood that in the embodiment of Fig. 4, from step 103 there is obtained a first product which comprises graphene and differs from the original layered structure at least in that the copper layer has been removed and the graphene has been treated with the adhesion promoter and the amine containing chemical compound. In step 104 of the embodiment of Fig. 4, the treated graphene of said first product that is obtained from step 103, is transferred to a target substrate. A very preferred way of implementing step 104 is illustrated by Fig. 5. In the embodiment of Fig. 5 which is similar to the embodiment of Fig. 4, step 104 comprises the following: in sub-step 104a, bonding (i.e. attaching) the product obtained by step 103, to a target substrate, via bonding a target substrate to the treated exposed surface of the graphene, thereby obtaining an intermediate structure (i.e. an intermediate product) which across a cross section of the same comprises, in the same order, the rigid substrate, the adhesive polymer layer, the graphene and the target substrate; in step 104b, removing the rigid substrate from the intermediate structure; in step 104c, removing the adhesive polymer from the rest of the structure that comprises the target substrate and the graphene. It is noted that in step 104b, when removing the rigid substrate from the intermediate structure, some of the polymer may remain on the rigid substrate. It can be understood that the application of the steps of the embodiment of Fig. 5 results to a product comprising the graphene attached to (i.e. adhered to) the target substrate. Hence, as a result application of the steps shown of Fig. 5, the graphene which was initially found in the layered structure provided in step 101, has been transferred to the target substrate. Preferably, said target substrate is a silicon/silicon oxide wafer, or more generally a wafer comprising silicon and/or silicon oxide. In some preferred embodiments, the target substrate is silicon on an insulator wafer (SOI), or a CMOS wafer, or hafnium oxide (HfO₂), or Silicon nitride (Si₃N₄), or Alumina (Al₂O₃), or plasma enhanced CVD (PECVD) SiO₂, or native SiO₂ on Si, or another type of substrate.

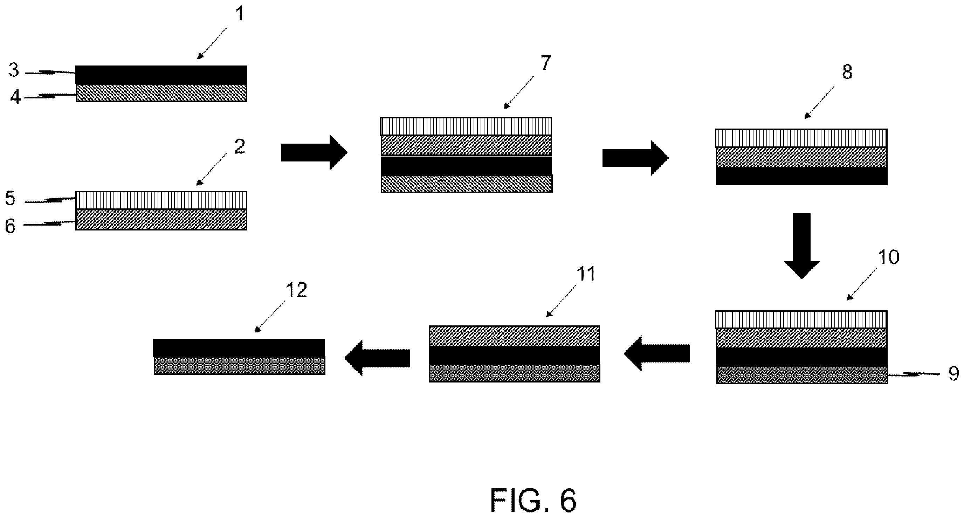

Fig. 6 schematically shows cross sections of the structures of various stacks involved in an embodiment of a process which includes the steps described further above with reference to Fig. 3, Fig. 4 and Fig. 5. Hence, in the embodiment of Fig. 6, as in the aforementioned steps 101a and 101b, initially there are provided a first stack 1 which comprises graphene 3 grown on a copper layer 4, and a second stack 2 which comprises a rigid substrate 5 with a polymer layer 6 formed or deposited on said rigid substrate 5. Then, as in the aforementioned step 101c, the first and the second stacks 1, 2 are bonded to each other, with the polymer layer 6 being attached to the graphene layer 3, thereby obtaining a layered structure 7. As shown in Fig. 6, said layered structure 7 comprises stacked, in the same order, the rigid substrate 5, the adhesive polymer layer 5, the graphene 3 and a copper layer 4. Then, as in the aforementioned steps 102 and 103, the copper layer 4 is removed leaving a surface of the graphene 3 exposed, and said exposed surface is being treated with the adhesion promoter and the amine containing chemical compound, thereby obtaining a first graphene product 8 (i.e. a product comprising graphene). Subsequently, as in the aforementioned step 104a, a target substrate 9 is bonded to the first graphene product 8. In the embodiment of Fig. 6, the target substrate 9 is a silicon/silicon oxide wafer. Hence, as shown in Fig. 6, there is obtained a second graphene product 10 wherein the target wafer 9 is bonded and attached to the treated and exposed surface of the graphene 3. Subsequently, as in the aforementioned step 104b, the rigid substrate 5 is being de-bonded from the polymer layer 6 of the second graphene product 10. Hence, the rigid substrate 5 is removed from the second graphene product 10, and there is obtained the third graphene product 11 as shown in Fig. 6. Subsequently, as in the aforementioned step 104c, in the process of Fig. 6 the adhesive polymer layer 6 is removed from the third graphene product 11, for obtaining a fourth graphene product 12 wherein the graphene layer is attached and adhered to a surface of the target wafer 9. It is noted that preferably, said adhesive polymer layer 6 is removed from the third graphene product 11 via (i.e. by means of) dissolving said polymer layer 6 using one or more appropriate solvents. It is noted that alternatively the removal of the adhesive polymer may be done in a dry manner, using dry etching.

Each of the graphene products 8, 10, 11 and 12 which are schematically shown in Fig. 6, is a respective preferred embodiment of a product which comprises graphene and is obtained by a process or method according to the first aspect of the invention. A very preferred embodiment of such a graphene product, i.e. of product comprising graphene, that is obtainable by process according to the invention, is the fourth graphene product 12 that is shown in Fig. 6 and is obtained by the respective process that is explained further above with reference to Fig. 6. By applying the steps which are described further above with reference to Fig. 4, Fig. 5 and Fig. 6, the graphene layer 3 of the first stack 1 is eventually transferred to the target substrate 9.

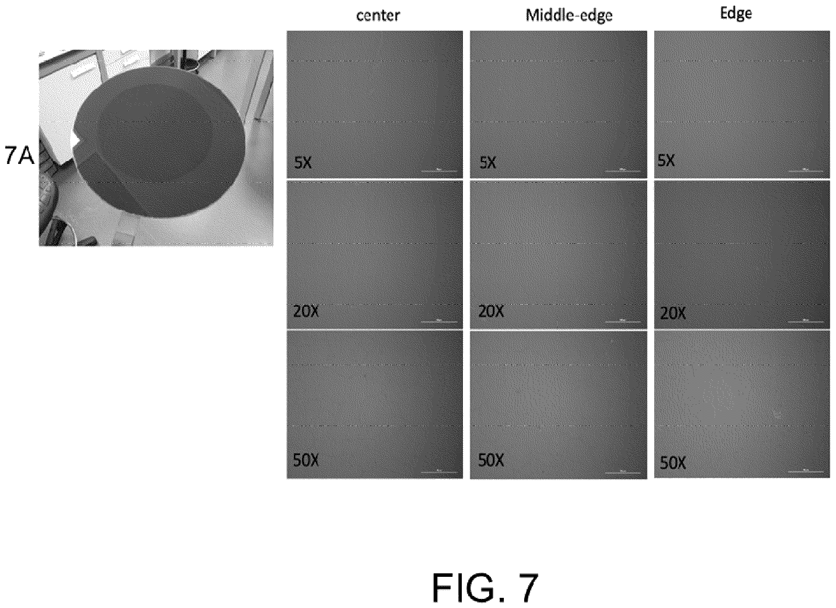

The application of the amine containing chemical compound and adhesion promoter treatment step 103 allows for achieving a very good transferability and adhesion of the graphene 3 onto the target substrate 9, such that in the fourth graphene product 12, the graphene 3 advantageously covers a respective surface of the target wafer 9, with said graphene 9 exhibiting a high degree of uniformity and without suffering from having a lot of holes or significant contamination with metals, particularly copper. The advantages offered by the process of the first aspect of the invention, can be further understood with reference to Fig. 7, Fig. 8 and Fig. 9, as is explained below.

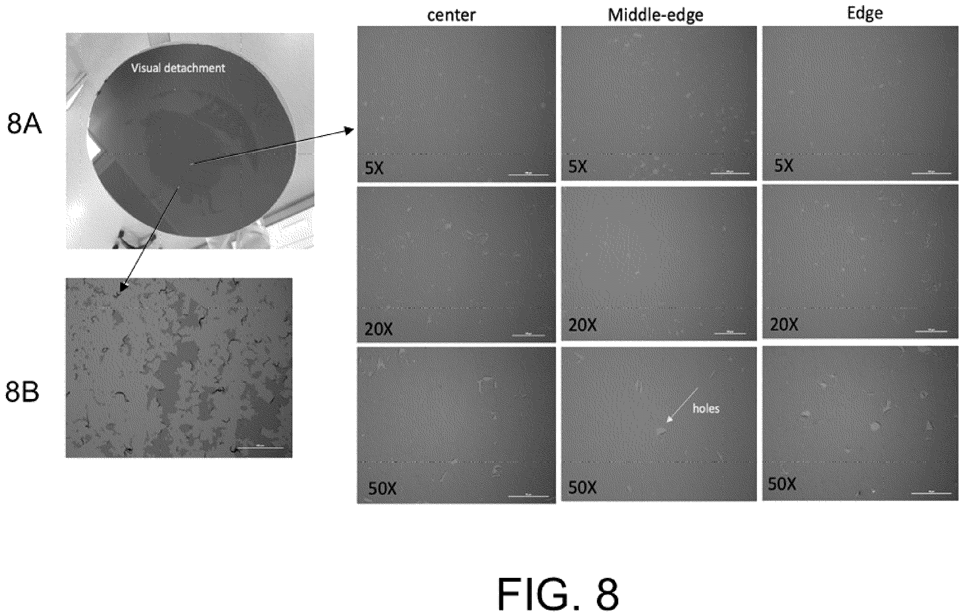

Fig. 7 shows optical images of a product that is obtained by applying the steps shown in Fig. 5 and Fig. 6. In the product of Fig. 7, the graphene, which in that particular product is an 8-inch graphene, has been transferred onto a 12-inch 90nm SiO₂/Si target wafer (target substrate) with a uniform and continuous surface, as shown in the left image 7A. The rest of the images of images of Fig. 7 have been captured with an optical microscope at 5x, 20x and 50x magnifications from different areas of the product's graphene layer, namely from the center, middle-edge and edge of the graphene layer. The images of Fig. 7, show that the graphene layer on the target wafer does not exhibit any visible holes, and its morphology is very good, especially when compared to the images/photographs of Fig. 8 which concerns a sample which was prepared with a process which had the same steps as the method used for the product of

Fig. 7, but without the adhesion promoter and amine containing chemical compound treatment step 103. This to say, for preparing the sample of Fig. 8, after removing the copper layer of the layered structure, the exposed graphene layer was not treated with an adhesion promoter and an amine containing chemical compound. Consequently, when subsequently transferring the graphene layer to the target wafer, said graphene layer was not transferred uniformly and did not cover uniformly the surface of the target wafer. Hence, as shown in images 8A and 8B, the graphene on the target wafer exhibits a high degree of delamination. This is further demonstrated in the rest of the image of Fig. 8, which were obtained with an optical microscope at different magnifications from different areas of the surface of the target wafer covered with the poorly transferred graphene layer. As understood from Fig. 8, the graphene layer of the sample of Fig. 8 has a much higher number of defects, e.g. holes, compared to the sample of

Fig. 7. Hence, from the comparison of Fig. 7 and Fig. 8, it can be understood that in the sample of Fig. 7 the graphene layered adhered well and uniformly on the target substrate, while in the case of Fig. 8 where no adhesion promoter was used, the graphene layer was not transferred well and did not adhere uniformly to the target wafer, causing the creation of a lot of holes as shown in Fig. 8.

For the samples (products) shown in Fig. 7 and Fig. 8, the adhesion of the graphene to the target wafer is evaluated by optical microscopy inspection quantifying the percentage of graphene area coverage on the wafer. When graphene is delaminated from the substrate due to a bad adhesion, this is known as detachment. Full inspection of the wafer was carried out automatically with the aid of a software to acquire images at different magnifications and positions, as the images shown in Fig. 7 and Fig. 8. From said full inspection it was found that for the sample of Fig. 7 the percentage of area coverage (i.e. coverage of the target substrate's surface by graphene) is higher than 99%. However, in the sample of Fig. 8, the corresponding percentage of area coverage is <50%. Similar results have been obtained when transferring the graphene on other substrates (target substrates) such as Hafnium oxide (HfO₂), Silicon nitride (Si₃N₄), Alumina (Al₂O₃), plasma enhanced CVD (PECVD) SiO₂, native SiO₂ on Si etc.

It is noted that the transfer and adhesion of the graphene to the substrate can be further improved by previously activating the target substrate with plasma (e.g. H2, O2, Ar , CHF3, O2, CH4, CF4-02, N20, SF6, NH3, N2, SiH4-N2, etc.), chemical solutions (e.g. NH₄OH) or self-assembly monolayers (e.g. APTES). For example, the target substrate may be previously activated with UV O3 plasma in order to make the substrate's surface more hydrophilic.

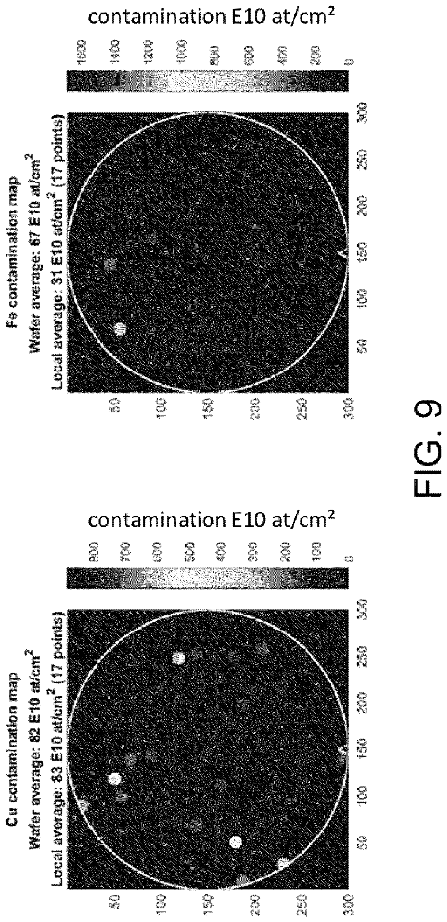

As mentioned further above, the process of the invention may also result to obtaining a graphene product wherein the graphene has remarkable low levels of metal contamination. This is demonstrated by the two contamination maps of Fig. 9 which were produced by TXRF measurements on 17 different points of the surface of the graphene of a sample (product) which was produced with an embodiment of a method similar to the one used for obtaining the sample of Fig. 7. The preparation of the sample used for the measurements of Fig. 9, involved transferring an 8-inch monolayer graphene onto a 12-inch 90 nm SiO₂/Si wafer. Metal mappings of said sample were acquired. As result, it was found that the concentration of Fe, Cu, K, Ni, Co, Cr and Mn resulted to be within the specifications (< 10¹² at/cm²) required for the integration of graphene in semiconductor fabrication plants that are used in the production of electronics. For example, the left map of Fig. 9 is the Cu contamination map, and the right map of Fig. 9 is the Fe contamination map of the sample. According to the respective TXRF measurements, the average concentration of the copper on the graphene which is located on the target wafer is 8.2 x 10¹¹ atoms/cm², and the average concentration of the iron on the graphene is 6.7 x 10¹¹ atoms/cm². Hence, surprisingly the graphene of the respective product which is obtained by an embodiment of the method according of the present invention, has exceptionally low levels of contamination with Cu and Fe, and this is beneficial for its application in electronics.

It is noted that in a first example of a process used for obtaining a product according to the invention, wherein the graphene in said product has a good transferability and low levels of contamination with Cu and Fe similarly to what is shown in Fig. 7 and Fig. 8, the copper layer of the provided original layered structure, said copper layer being a 20 µm copper foil (i.e. a copper foil with a thickness of 20 micrometers), was chemically etched using an RCA-based cleaning process using a number of SC2 (HCl:H₂O₂:H₂O) containing solutions. In said RCA-based cleaning process, a sequence of different SC2-containing solutions with different concentrations and etching times is applied. First, the multilayer structure is treated with a HCl:H₂O₂:H₂O (1:1:100) during 8 min, secondly, it is treated with HCl:H2O2:H2O (1:1:20) during 12 min (minutes), and finally it is treated with a third solution of HCl:H2O2:H2O (1:1:8) during 16 min. In this step, an amine additive and an organic molecule based adhesive enhancer (i.e. adhesion promoter) have been added at 10⁻³ vol% and 1M respectively in the third solution. The third solution was heated at 50°C. Due to the fact that in the aforementioned embodiment, there is used an etchant solution (i.e. a solution that can etch the copper layer) in which there has been added the amine and the adhesion promoter used for treating the graphene's surface that is exposed when the copper layer is etched, the particular process involving said solution is coined by the inventors as the "all in" approach. The adhesion promoter used in said all-in approach preferably is citric acid. However, alternatively, the adhesion promoter in said all-in approach may be an organic chemical compound which comprises any of a hydroxy group, a carboxylic group, an amine group, an aldehyde group or a combination thereof. More preferably the adhesion promoter is any of glucose, a lactic acid, a citric acid, a tartaric acid, a uric acid, or a catechol, or citric acid. The amine containing chemical compound used in said all-in approach preferably is methylamine.

In a second example of a process used for obtaining a product according to the invention, the removing of the copper layer and the treatment with the adhesion promoter are performed in separate processing steps. In said second example, there is used a two-steps recipe comprising SC1 (NH₄OH:HCl:H₂O) and SC2 (HCl:H2O2:H2O) cleanings. First the metal Cu foil is etched away using an aqueous solution containing HCl:H₂O₂:H₂O (1:1:20) during 10 min. Then, a NH₄:HCl:H₂O (1:1:5) solution is used for 5 min. After these two steps, an extra-cleaning step in an aqueous solution containing HNOs was done with the intention of improving the cleanliness of the film. Subsequently, the etched and cleaned layered structure (i.e. the layered structure without the etched copper foil) was rinsed with a solution of the adhesion promoter.

In this text, the term "comprises" and its derivations (such as "comprising", etc.) should not be understood in an excluding sense, that is, these terms should not be interpreted as excluding the possibility that what is described and defined may include further elements, steps, etc.

The invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. A process for obtaining a product which comprises graphene, the process comprising:
providing a layered structure which across a cross section of the same comprises stacked, in the same order, a rigid substrate, an adhesive polymer layer, graphene and a copper layer attached to a surface of the graphene;
removing the copper layer, thereby exposing the surface of the graphene;
treating the exposed surface of the graphene with an adhesion promoter and an amine containing chemical compound.

2. A process according to claim 1, wherein the adhesion promoter comprises an organic chemical compound which comprises any of a hydroxy group, a carboxylic group, an amine group, an aldehyde group or a combination thereof, preferably the adhesion promoter comprising a hydroxy group containing chemical compound, more preferably the adhesion promoter comprising any of glucose, a lactic acid, a citric acid, a tartaric acid, or a catechol.

3. A process according to claim 1, wherein the amine containing chemical compound is methylamine.

4. A process according to any of the previous claims, wherein the treating of the exposed surface of the graphene comprises wetting the exposed surface with a first solution comprising the adhesion promoter, and afterwards wetting the exposed surface with a second solution comprising the amine containing chemical compound, preferably the concentration of the amine containing chemical compound in the second solution being from 10⁻⁷ vol% to 1 vol%.

5. A process according to claim 4, wherein the concentration of the adhesion promoter in the first solution is at least 1mM, preferably from 1 mM to 1 M.

6. A process according to any of the previous claims, wherein the treating of the exposed surface of the graphene comprises wetting the exposed surface with a compound solution comprising the adhesion promoter and the amine containing chemical compound, preferably the concentration of the amine containing chemical compound in the compound solution being from 10⁻⁷ vol% to 1 vol% and the concentration of the adhesion promoter in the compound solution is at least 1mM, preferably from 1 mM to 1 M.

7. A process according to any of the preceding claims, wherein the removing of the copper layer comprises applying an electrochemical delamination of the graphene from the copper layer, or a chemical etching of the copper layer using an etchant solution, preferably the etchant solution comprising hydrochloric acid.

8. A process according to claim 7, wherein the removing of the copper layer comprises the chemical etching of the copper layer using the etchant solution, and the etchant solution comprises the adhesion promoter and/or the amine containing chemical compound, and the treating of the exposed surface of the graphene comprises wetting the exposed surface with the etchant solution.

9. A process according to claim 8, wherein the etchant solution comprises the adhesion promoter, and the concentration of the adhesion promoter in the first solution is at least 1mM, preferably from 1mM to 1M, preferably the adhesion promoter being a hydroxy group containing chemical compound.

10. A process according to any of the preceding claims, wherein the step of providing the layered structure comprises:
growing the graphene on the copper layer, preferably by chemical vapor deposition, thereby forming a first stack that comprises the graphene and the copper layer;
depositing the adhesive polymer layer on the rigid substrate, thereby forming a second stack that comprises the adhesive polymer and the rigid substrate;
bonding together the first and second stack via attaching the surface of the graphene to the adhesive polymer layer.

11. A process according to any of the preceding claims, wherein the concentration of copper on the treated exposed surface of the graphene is less than 10¹² atoms/cm², preferably less than 10¹¹ atoms/cm².

12. A process according to claim 11, wherein the concentration of the copper is measured with total reflection X-Ray fluorescence.

13. A process according to any of the preceding claims, further comprising the steps of bonding a target substrate to the treated exposed surface of the graphene, thereby obtaining an intermediate structure which across a cross section of the same comprises, in the same order, the rigid substrate, the adhesive polymer layer, the graphene and the target substrate.

14. A process according to claim 13, further comprising removing the rigid substrate and subsequently removing the adhesive polymer from the rest of the intermediate structure.

15. A product comprising graphene and obtained by the process of any of claims 1-14.
